# EUROPEAN PATENT APPLICATION

(11) **EP 4 807 499 A1**
(43) Date of publication of application: **16.09.2026**
(21) Application number: 24907423.8
(22) Date of filing: 17.12.2024
(51) Int. Cl.: G06F 3/01, A61B 10/00

(54) **HUMAN AUGMENTATION PLATFORM DEVICE AND PERCEPTION AUGMENTATION METHOD**

(30) Priority: 20.12.2023 JP 2023214962
(71) Applicant: NTT DOCOMO, INC., Tokyo 100-6150 (JP)
(72) Inventor: ISHIKAWA, Hironori, Tokyo 100-6150 (JP)
(74) Representative: Hoffmann Eitle
(86) International application number: PCT/JP2024/044640
(87) International publication number: WO 2025/135038

(57) **Abstract**

A human augmentation platform device 100 includes a sensitivity information acquisition unit 110 that presents questions regarding perception including at least one of taste or smell to a user and acquires a plurality of pieces of sensitivity information obtained by multiplying a sensitivity score of perception of the user by basic data of the perception; a comparison processing unit 150 that compares first sensitivity information selected from among the plurality of pieces of sensitivity information with second sensitivity information selected from among the plurality of pieces of sensitivity information; a data conversion unit 160 that converts a difference between a first sensitivity score included in the first sensitivity information and a second sensitivity score included in the second sensitivity information into control data obtained by multiplying the difference by the basic data, and an actuation unit 170 that actuates a predetermined device based on the control data.

## Description

### TECHNICAL FIELD

The present disclosure relates to a human augmentation platform device and a perception augmentation method that support the augmentation of human perception.

### BACKGROUND ART

The 3rd Generation Partnership Project (3GPP) has specified the 5th generation mobile communication system (also called 5G, New Radio (NR), or Next Generation (NG)), and is further advancing the specification of the next generation called Beyond 5G, 5G Evolution, or 6G.

One of the technologies that will attract attention in the 6G era is human augmentation. Human augmentation is broadly divided into "augmentation of physical ability," "augmentation of presence," "augmentation of perception," and "augmentation of cognitive ability."

Among these, the augmentation of perception refers to the sharing or augmentation of the five senses. Sight and hearing have already reached a certain level of technical maturity, and touch is in the stage of being developed through various interface technologies. Taste and smell are still at a frontier stage, with research on receptors or the like progressing (Non-Patent Literature 1 and 2).

### CITATION LIST

### NON-PATENT LITERATURE

[Non-Patent Literature 1] NTT DOCOMO, "DOCOMO 6G White Paper Ver. 5.0," [online], November 2022, Internet <URL: https://www.docomo.ne.jp/binary/pdf/corporate/technology/whitepaper_6g/DOCOMO_ 6G_White_PaperJP_20221116.pdf>
[Non-Patent Literature 2] Human Augmentation Platform Enabling New Forms of Communication, [online], October 2023, Internet <URL: https://www.docomo.ne.jp/corporate/technology/rd/technical_journal/bn/vol31_3/index. html>

### SUMMARY OF INVENTION

It is known that taste and smell have large individual differences in the first place, and that sensitivity varies from person to person. It is also known that the way taste is perceived changes depending on age.

For this reason, even if one tries to augment taste or smell by simply using a human augmentation platform device such as the Human Augmentation Platform (registered trademark), there is often a large gap with individual perception, and the accuracy thereof becomes a problem.

Therefore, the following disclosure has been made in view of such circumstances, and has an object to provide a human augmentation platform device and a perception augmentation method that can cope with individual differences in taste and smell.

One aspect of the present disclosure is a human augmentation platform device (human augmentation platform device 100) including: an acquisition unit (sensitivity information acquisition unit 110) that presents questions regarding perception including at least one of taste or smell to a user and acquires a plurality of pieces of sensitivity information obtained by multiplying a sensitivity score of the perception of the user by basic data of the perception; a comparison unit (comparison processing unit 150) that compares first sensitivity information selected from among the plurality of pieces of sensitivity information acquired by the acquisition unit with second sensitivity information selected from among the plurality of pieces of sensitivity information acquired by the acquisition unit; a conversion unit (data conversion unit 160) that converts a difference between a first sensitivity score included in the first sensitivity information and a second sensitivity score included in the second sensitivity information into control data obtained by multiplying the difference by the basic data; and an actuation unit (actuation unit 170) that actuates a predetermined device based on the control data.

### BRIEF DESCRIPTION OF DRAWINGS

[FIG. 1] FIG. 1 is an overall schematic configuration diagram of a human augmentation system 10.
[FIG. 2] FIG. 2 is a functional block configuration diagram of a human augmentation platform device 100.
[FIG. 3A] FIG. 3A is a diagram illustrating an example of a detailed block configuration of the human augmentation platform device 100 (human augmentation platform).
[FIG. 3B] FIG. 3B is a diagram illustrating an example of a detailed block configuration of the human augmentation platform device 100 (human augmentation platform).
[FIG. 4] FIG. 4 is a schematic explanatory diagram of the taste augmentation operation by the human augmentation platform device 100 (human augmentation platform).
[FIG. 5] FIG. 5 is a diagram illustrating a flow of taste augmentation processing.
[FIG. 6] FIG. 6 is a diagram illustrating a flow of smell augmentation processing.
[FIG. 7] FIG. 7 is a diagram illustrating an example of sensitivity data (score) of taste of a specific user and corrected taste data.
[FIG. 8] FIG. 8 is a diagram illustrating an example of sensitivity data (score) of smell of a specific user and corrected taste data.
[FIG. 9] FIG. 9 is an explanatory diagram of taste transmission correction based on differences in granularity.
[FIG. 10] FIG. 10 is an explanatory diagram of correction by age group of the taste augmentation target person (user).
[FIG. 11] FIG. 11 is a graph illustrating changes in taste associated with aging.
[FIG. 12] FIG. 12 is an explanatory diagram of AI model construction for personalized taste transmission.
[FIG. 13] FIG. 13 is an explanatory diagram of AI model construction for personalized taste transmission.
[FIG. 14] FIG. 14 is an explanatory diagram of AI model construction for conversion from language to taste.
[FIG. 15] FIG. 15 is an explanatory diagram of AI model construction for conversion from taste to language.
[FIG. 16] FIG. 16 is a diagram illustrating an example of a hardware configuration of the human augmentation platform device 100.

### DESCRIPTION OF EMBODIMENTS

Hereinafter, embodiments will be described based on the drawings. The same or similar reference signs are assigned to the same functions and configurations, and the description thereof will be omitted as appropriate.

### (1) Overall Schematic Configuration of Human Augmentation Platform Device

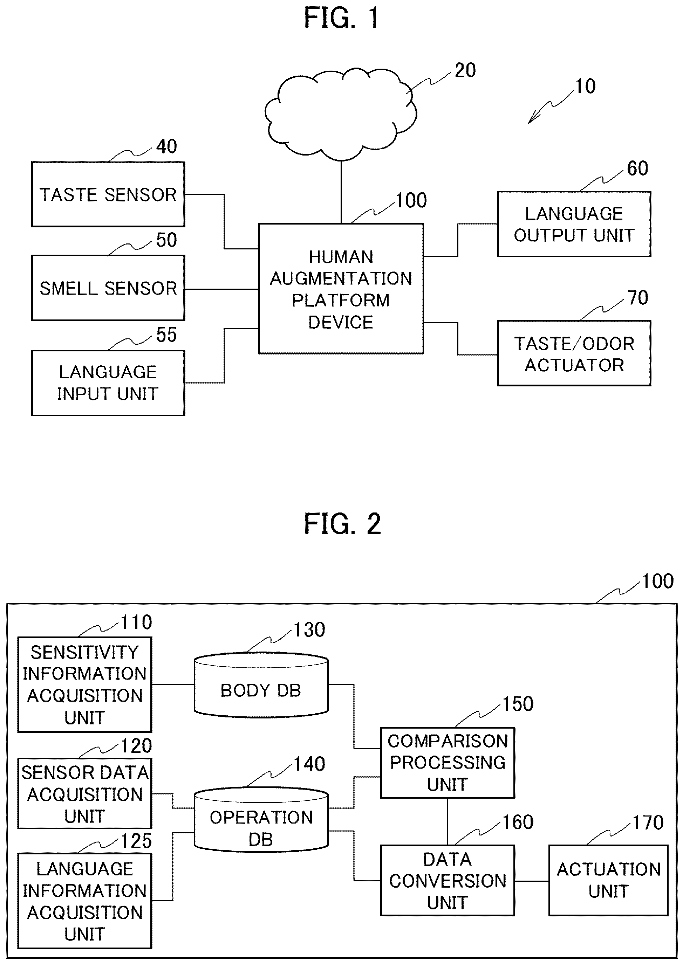

FIG. 1 is an overall schematic configuration diagram of a human augmentation system 10 according to the present embodiment. As illustrated in FIG. 1, the human augmentation system 10 includes a sensing side configured by a plurality of sensor groups having different measurement targets and an augmentation side (which may be called a controlled side or an actuation side) in which a human (person) or a robot is a control target.

A human augmentation platform device 100 is connected to the sensing side and the augmentation side. Further, the human augmentation platform device 100 may be connected to a communication network 20.

In the present embodiment, the human augmentation platform device 100 is connected to a taste sensor 40, a smell sensor 50, and a language input unit 55. Further, the human augmentation platform device 100 is connected to a language output unit 60 and a taste/odor actuator 70.

The communication network 20 may include a wired network and a wireless network. The human augmentation platform device 100 may be able to access other systems, databases, application services, or the like via the communication network 20.

The taste sensor 40 may be called a flavor sensor or a taste recognition device. The taste sensor 40 can quantify bitterness, sweetness, sourness, saltiness, and the like, which are taste components. Specifically, the taste sensor 40 has the same mechanism as the human tongue and quantifies bitterness, sweetness, sourness, saltiness, and the like of various foods, pharmaceuticals, and the like. As the taste sensor 40, for example, a taste sensor that mimics the biological taste reception mechanism can be used.

The smell sensor 50 may be called an odor sensor or an odorant sensor. The smell sensor 50 can quantify components of odor (smell) (for example, freshness, volatile odor, off-odor). As the smell sensor 50, for example, a quartz crystal oscillator type or a semiconductor type can be used. In particular, in the present embodiment, the quartz crystal oscillator type can be suitably used.

The language input unit 55 inputs a language expression of a user of the human augmentation platform device 100. Specifically, the language input unit 55 can input a language expression regarding taste or smell by the user. The input method may be input by voice or input using a keyboard or the like. For example, the user can input "a scent like roses and a taste that floats up from the ground. Close to brand X at a price of about 30,000 yen. Sharp taste / well-balanced taste" or the like using the language input unit 55.

The language output unit 60 outputs language information regarding taste or smell. Specifically, the language output unit 60 can execute output of audio data regarding taste or smell input from the human augmentation platform device 100, display of character information, or the like.

The taste/odor actuator 70 is a device that generates a specific taste or odor based on taste or smell control data input from the human augmentation platform device 100. The control data of taste (which may be called taste data) may be configured by values such as bitterness, sweetness, sourness, and saltiness as described above, and the control data of smell (which may be called smell data) may be configured by values of components of odor (smell) (for example, freshness, volatile odor, off-odor).

The human augmentation platform device 100 is connected to the sensing side and the augmentation side (controlled side) to realize human augmentation. Specifically, the human augmentation platform device 100 realizes the augmentation of perception. In the present embodiment, the perception may include at least one of taste or smell. The perception may include sight, hearing, and touch in addition to taste and smell. The augmentation of perception may mean the sharing or augmentation of the five senses.

### (2) Functional Block Configuration of Human Augmentation Platform Device

FIG. 2 is a functional block configuration diagram of the human augmentation platform device 100. As illustrated in FIG. 2, the human augmentation platform device 100 includes a sensitivity information acquisition unit 110, a sensor data acquisition unit 120, a language information acquisition unit 125, a body DB 130, an operation DB 140, a comparison processing unit 150, a data conversion unit 160, and an actuation unit 170.

The sensitivity information acquisition unit 110 acquires sensitivity information regarding the sensitivity of perception of a user. Specifically, the sensitivity information acquisition unit 110 presents questions regarding perception including at least one of taste or smell to a user, who is a human (person), and acquires a plurality of pieces of sensitivity information including a sensitivity score of perception of the user. In the present embodiment, the sensitivity information acquisition unit 110 may constitute the acquisition unit.

More specifically, the sensitivity information acquisition unit 110 can present questions regarding perception including at least one of taste or smell to the user and acquire a plurality of pieces of sensitivity information obtained by multiplying the sensitivity score of perception of the user by the basic data of perception.

The questions presented by the sensitivity information acquisition unit 110 may be in the form of a questionnaire. For example, the sensitivity information acquisition unit 110 may present the questionnaire to user A and user B, and acquire responses from user A and user B, respectively. The number of questions included in the questionnaire is not particularly limited, but about 20 to 30 questions are preferable in order to efficiently recognize the sensitivity score of each person in terms of taste or smell (details will be described below).

The sensitivity score (which may be called sensitivity data) may be data in which at least one of bitterness, sweetness, sourness, saltiness, or umami is quantified (for example, as a percentage) in the case of taste. Further, the sensitivity score may be data in which components of odor (smell) (for example, freshness, volatile odor, off-odor) are quantified (for example, as a percentage) in the case of smell.

The basic data of perception may be configured by, for example, in the case of taste, numerical values of bitterness, sweetness, sourness, saltiness, and umami included in a specific dish. The sensitivity information acquisition unit 110 may acquire sensitivity information by multiplying the value of the sensitivity score of the user by the value (for example, percentage) of each constituent element of the basic data.

The sensitivity information acquisition unit 110 may acquire the gender, age, preference, and the like of the user together with responses to such questionnaires regarding taste or smell.

The sensor data acquisition unit 120 acquires data output from various sensors. In the present embodiment, the sensor data acquisition unit 120 can acquire data acquired from the taste sensor 40 and the smell sensor 50.

The sensor data acquisition unit 120 acquires quantified data regarding taste output from the taste sensor 40. Further, the sensor data acquisition unit 120 acquires quantified data regarding smell output from the smell sensor 50.

The language information acquisition unit 125 acquires language information based on the language expression of the user input via the language input unit 55. Specifically, the language information acquisition unit 125 can acquire the language expression input via the language input unit 55 as language information of characters (or voice).

The language information acquisition unit 125 stores the acquired language information in the operation DB 140.

The body DB 130 stores information regarding the body of the user. In the present embodiment, the body DB 130 stores the sensitivity information acquired by the sensitivity information acquisition unit 110. Specifically, the body DB 130 may be configured by sensitivity score (sensitivity data), and personal information such as gender, age, and preferences, for each user. The user may include notable individuals, and the body DB 130 can store the sensitivity information of the notable individuals.

The operation DB 140 stores data acquired by the sensor data acquisition unit 120. In the present embodiment, the operation DB 140 can store sensitivity data for each specific food, based on the data acquired by the sensor data acquisition unit 120.

The comparison processing unit 150 compares the sensitivity information for each user stored in the body DB 130. For example, the comparison processing unit 150 can compare the sensitivity information of user A with the sensitivity information of user B.

Specifically, the comparison processing unit 150 can compare the sensitivity information of user A (first sensitivity information) selected from among the plurality of pieces of sensitivity information acquired by the sensitivity information acquisition unit 110 with the sensitivity information of user B (second sensitivity information) selected from among the plurality of pieces of sensitivity information acquired by the sensitivity information acquisition unit 110. In the present embodiment, the comparison processing unit 150 may constitute the comparison unit.

Such a comparison of the sensitivity information of the user by the comparison processing unit 150 may be called a body comparison. The comparison processing unit 150 can compare the value of the sensitivity score (sensitivity data) included in the sensitivity information of user A with the value of the sensitivity score (sensitivity data) included in the sensitivity information of user B, and can output the difference for each constituent element of the sensitivity score or the like to the data conversion unit 160.

The data conversion unit 160 generates control data to be output to the actuation unit 170 based on the comparison result of the sensitivity information output from the comparison processing unit 150. For example, the data conversion unit 160 can correct the first sensitivity score included in the first sensitivity information based on the comparison result between the sensitivity information of user A (first sensitivity information) and the sensitivity information of user B (second sensitivity information). The data conversion unit 160 converts the first sensitivity score into control data that matches the second sensitivity score included in the second sensitivity information by correcting the first sensitivity score. In the present embodiment, the data conversion unit 160 may constitute the conversion unit.

Specifically, the data conversion unit 160 can convert the difference between the first sensitivity score included in the sensitivity information of user A (first sensitivity information) and the second sensitivity score included in the sensitivity information of user B (second sensitivity information) into control data obtained by multiplying the difference by the basic data of perception.

For example, the data conversion unit 160 uses the difference between the first sensitivity score and the second sensitivity score, that is, in the case of taste, the difference in data in which at least one of bitterness, sweetness, sourness, saltiness, or umami is quantified (for example, as a percentage). Further, the data conversion unit 160 uses the basic data of a specific dish, specifically, the numerical values of bitterness, sweetness, sourness, saltiness, and umami included in the specific dish as described above.

The data conversion unit 160 can convert the difference in the sensitivity score and the numerical value of the basic data of the dish into control data by multiplication. Specifically, the data conversion unit 160 can multiply the difference in each of bitterness, sweetness, sourness, saltiness, and umami by the values (percentages) of bitterness, sweetness, sourness, saltiness, and umami of the basic data of the dish.

In this way, the data conversion unit 160 can generate control data using the sensitivity score of user A, the sensitivity score of user B, and the basic data of the dish or the like. The taste that user A perceives can be generated by multiplying the basic data by the sensitivity score of user A. Similarly, the taste that user B perceives can be generated by multiplying the basic data by the sensitivity score of user B.

Therefore, by multiplying the basic data by the difference between the first sensitivity score and the second sensitivity score, it becomes possible for user B to perceive the taste of user A when eating the dish.

Although taste is described here, the same processing may be applied to smell. Further, the difference may be a value obtained by simply subtracting one of the first sensitivity score or the second sensitivity score from the other, or a ratio of the difference between a certain reference value and the first sensitivity score and the difference between the reference value and the second sensitivity score may be used.

The data conversion unit 160 may convert the ratio of the constituent elements of the sensitivity score based on the comparison result of the sensitivity information between users (body comparison). Further, the data conversion unit 160 may correct the first sensitivity score and match the second sensitivity score by changing the granularity of the constituent elements included in a taste object. An example of the change in the granularity will be described below.

Further, the data conversion unit 160 may correct the first sensitivity score according to the age of the user to match the second sensitivity score. For example, it is known that taste (the way taste is perceived) changes according to age. When the age (age group) of user A and the age (age group) of user B are different, the data conversion unit 160 may correct the sensitivity score so as to correct the different way of perceiving taste according to the age. An example of correction by age group will be described below.

The data conversion unit 160 may input the sensitivity information into an artificial intelligence (AI) system. For example, the data conversion unit 160 can acquire language information in which the sensitivity score is verbalized based on the sensitivity information by inputting the sensitivity information (sensitivity score) provided from the comparison processing unit 150 into a generative AI system. The type of generative AI system is not particularly limited, and it is sufficient that some language information can be output by inputting the sensitivity score of taste or smell, that is, the numerical value for each constituent element or the like. The data conversion unit 160 may provide control data including the language information acquired from the AI system to the actuation unit 170.

Further, the data conversion unit 160 can also acquire a sensitivity score quantified based on the language information by inputting the language information verbalized by the user into the AI system. The data conversion unit 160 may provide control data using the sensitivity score acquired from the AI system to the actuation unit 170.

Further, the data conversion unit 160 may apply feedback control between the first sensitivity score and the second sensitivity score. For example, the data conversion unit 160 may execute feedback by PID (Proportional, Integral, Differential) control on the first sensitivity score based on the corrected second sensitivity score, and adjust the correction level of the first sensitivity score.

The actuation unit 170 actuates a predetermined device based on the control data provided from the data conversion unit 160. Specifically, the actuation unit 170 actuates the taste/odor actuator 70 based on the control data. More specifically, the actuation unit 170 can output control data in which constituent elements of taste or smell are quantified to the taste/odor actuator 70.

Further, the actuation unit 170 can output control data including language information provided from the data conversion unit 160 to the language output unit 60. Further, the actuation unit 170 can output control data using the sensitivity score provided from the data conversion unit 160 to the taste/odor actuator 70.

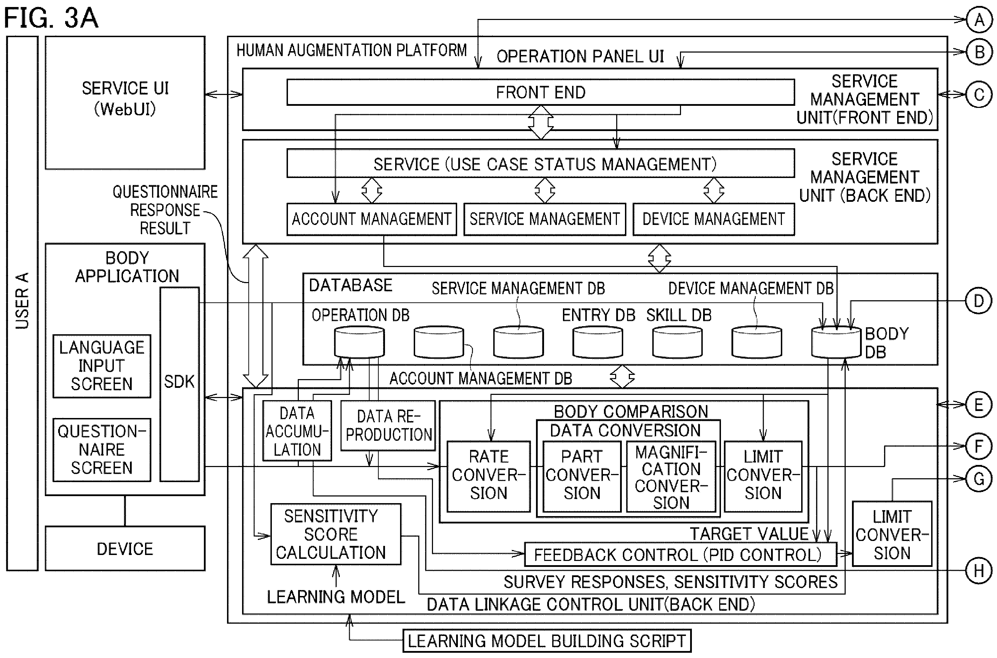

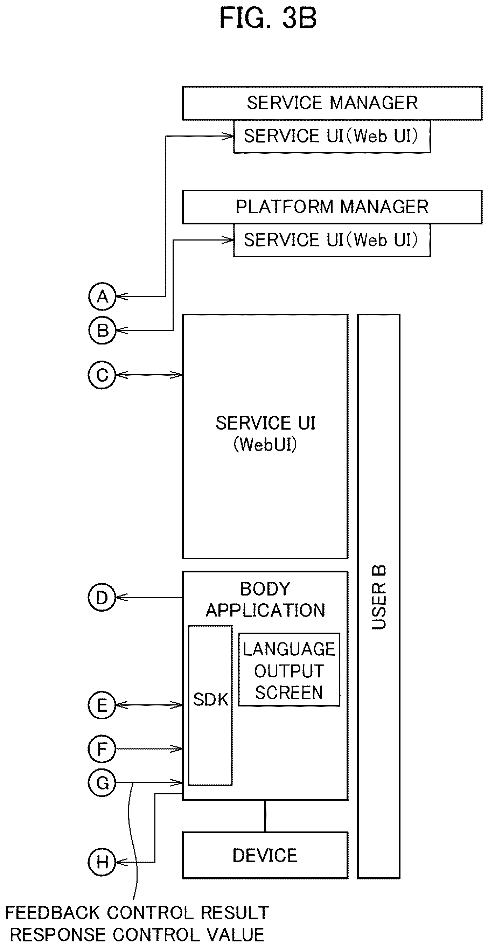

FIGS. 3A and 3B illustrate examples of a detailed block configuration of the human augmentation platform device 100 (human augmentation platform). As illustrated in FIGS. 3A and 3B, in order to prepare sensitivity information of taste and smell, the body application on the input (user A) side may include a language input/output screen and a screen for questionnaire.

The human augmentation platform can synthesize taste/smell data with the sensitivity of an individual and transmit the taste/smell data to the other party by applying various transmission corrections (granularity, age group, or the like). The user can select optional taste/smell data from the data stored (accumulated) in the human augmentation platform. For example, the user can select whether to wish to experience the taste/smell of a specific user from a user list such as notable individuals.

In the data linkage control in the human augmentation platform, calculation of the sensitivity score may be executed. Further, the data conversion processing in the human augmentation platform may include synthesis of individual taste/smell data, ratio conversion by body data comparison, transmission correction (granularity, age group, or the like), magnification conversion, and limit conversion based on an upper limit value.

After the comparison of the body data and after various corrections, sensing data (control data) configured by taste/smell data is provided to the body application on the output (user B) side.

### (3) Operation of Human Augmentation Platform Device

Next, the operation of the human augmentation platform device 100 will be described. Specifically, an augmentation operation example for taste and smell by the human augmentation platform device 100 (human augmentation platform) will be described.

### (3.1) Schematic Operation

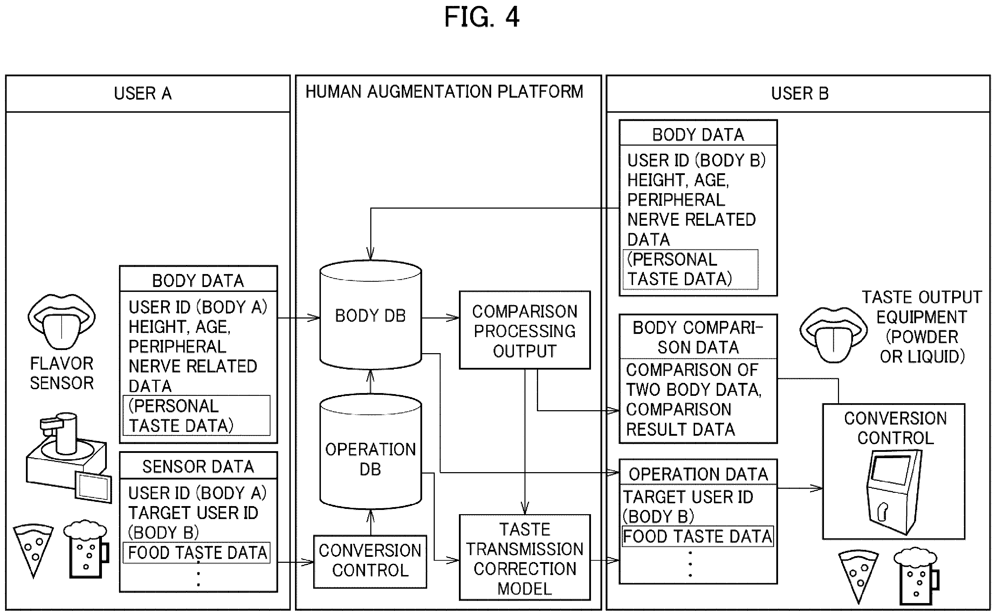

FIG. 4 is a schematic explanatory diagram of the taste augmentation operation by the human augmentation platform device 100 (human augmentation platform). The human augmentation platform device 100 can provide the following functions regarding the augmentation of taste.

- Transmission correction model based on differences in taste and granularity
- Transmission correction model of taste by age group
- Personalization to a specific user (taste transmission from language expression, evaluation by language expression from taste transmission)
As illustrated in FIG. 4, on the user A (body A) side, body data, sensor data (using a flavor sensor), taste data of food, and the like are prepared. The human augmentation platform may execute comparison processing of the sensitivity information of the selected user information, and construct a taste transmission correction model. On the user B (body B) side, body data, body comparison data, operation data (which may be called control data), taste data of food, and the like are prepared.

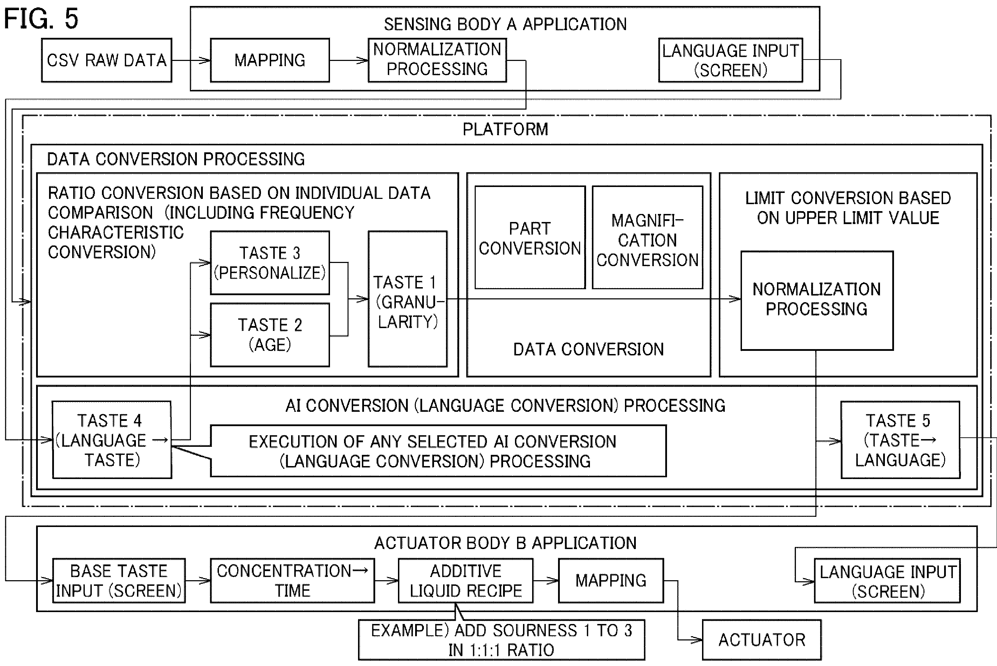

FIG. 5 illustrates a flow of taste augmentation processing. As illustrated in FIG. 5, the human augmentation platform can execute ratio conversion based on data comparison for each individual (which may include frequency characteristic conversion), limit conversion based on an upper limit value (normalization processing), actuator actuation, output of verbalized information (language output), and the like.

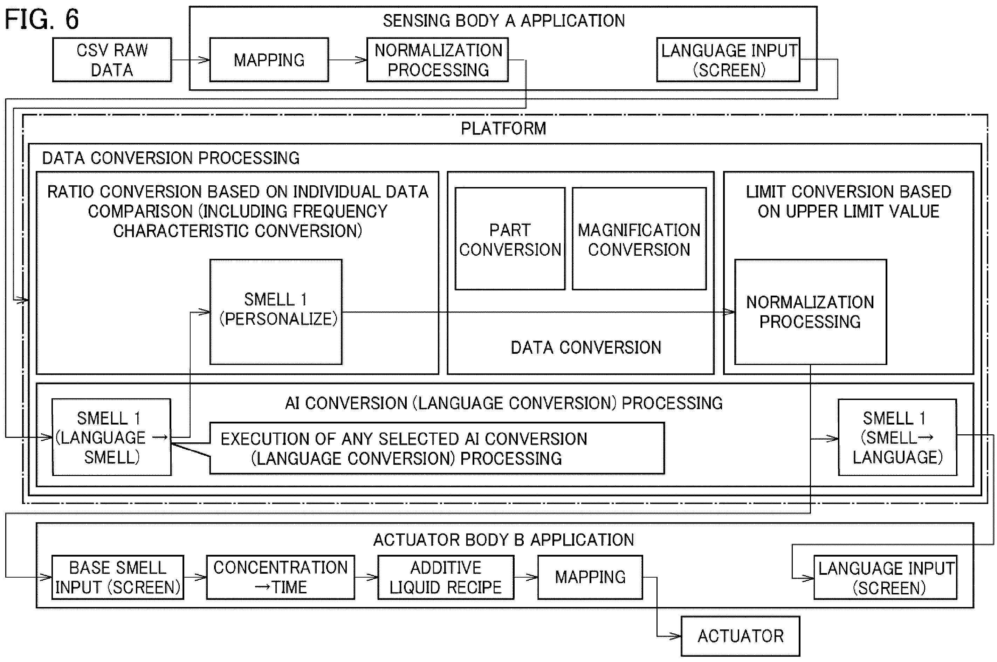

FIG. 6 illustrates a flow of smell augmentation processing. As illustrated in FIG. 6, the human augmentation platform can execute ratio conversion based on data comparison for each individual (which may include frequency characteristic conversion), limit conversion based on an upper limit value (normalization processing), actuator actuation, output of verbalized information (language output), and the like, similarly to the case of taste illustrated in FIG. 5. In the case of smell, compared to taste, correction of age and granularity need not be supported.

Further, in the case of taste and smell, data conversion such as part conversion and magnification conversion as in the augmentation of physical ability need not be applied.

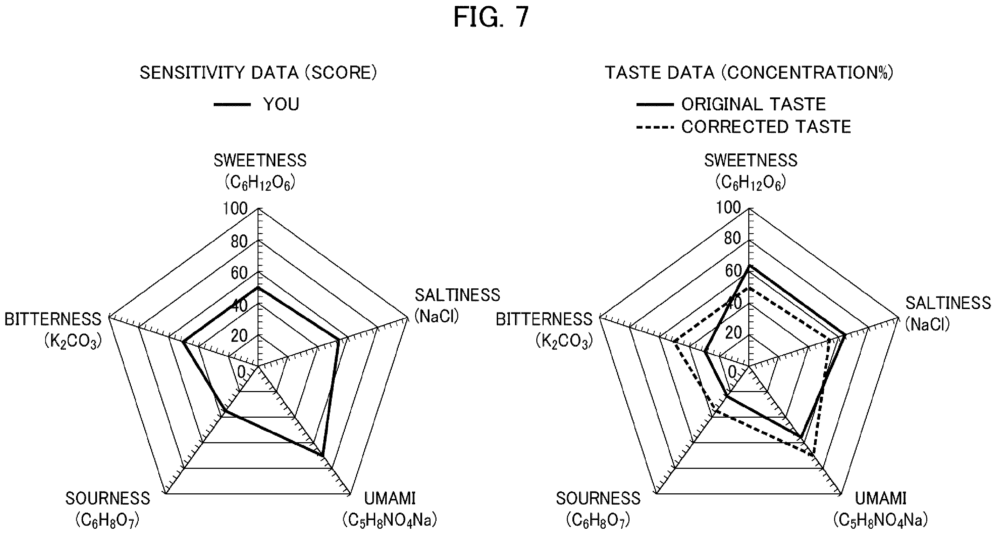

FIG. 7 illustrates an example of sensitivity data (score) of taste of a specific user and corrected taste data. As illustrated in FIG. 7, in the present embodiment, the taste may include constituent elements of bitterness, sweetness, sourness, saltiness, and umami. In the graph on the right side of FIG. 7, the taste data corrected by the correction described above is illustrated by a dotted line. The taste data is, for example, data corrected so that user B perceives the same taste as the taste perceived by user A based on the difference in the sensitivity data between user A and user B.

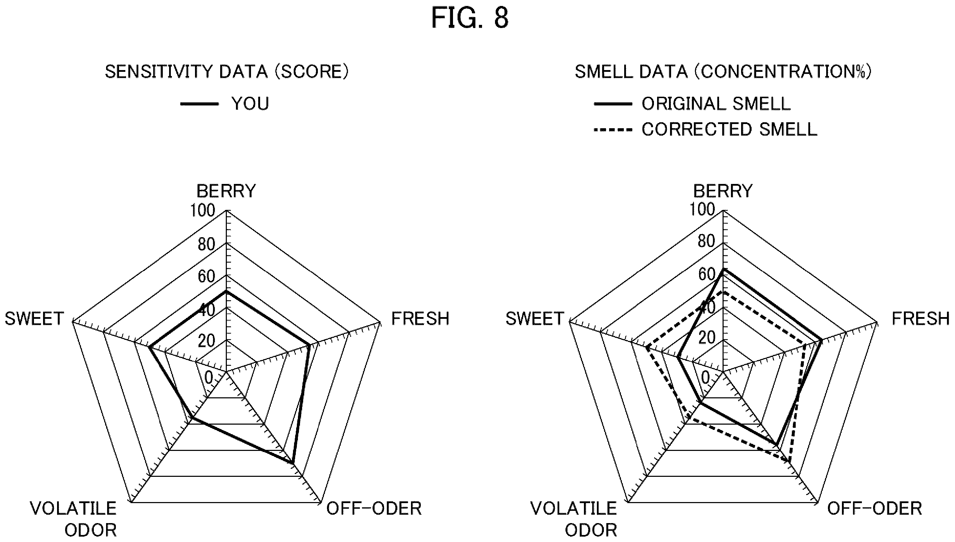

FIG. 8 illustrates an example of sensitivity data (score) of smell of a specific user and corrected taste data. In the present embodiment, the smell may include constituent elements of berry, sweets, volatile odor, off-odor, and freshness. In the graph on the right side of FIG. 8, the smell data corrected by the correction described above is illustrated by a dotted line. The smell data is, for example, data corrected so that user B perceives the same smell as the smell perceived by user A based on the difference in the sensitivity data between user A and user B.

As described above, in the case of taste, a value obtained by multiplying the basic data of a dish or the like by the difference between the sensitivity score of user A (first sensitivity score) and the sensitivity score of user B (second sensitivity score) may be used as corrected data.

### (3.2) Operation Examples

Next, operation examples of the human augmentation platform device 100 regarding the augmentation of taste or smell will be described. Specifically, operation examples regarding taste transmission correction based on differences in granularity, taste transmission correction by age group, AI model construction for personalized taste (smell) transmission, AI model construction for conversion from language to taste (smell), and AI model construction for conversion from taste to language will be described.

### (3.2.1) Taste Transmission Correction Based on Differences in Granularity

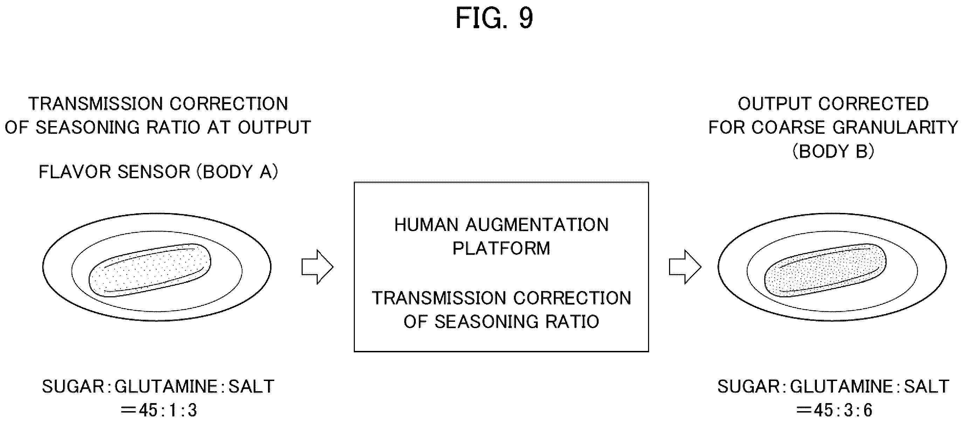

FIG. 9 is an explanatory diagram of taste transmission correction based on differences in granularity. The correction is a transmission correction of the seasoning ratio at the time of output based on the ratio between the granularity of the seasoning at the time of input (body A) and the granularity of the seasoning at the time of output (body B).

As illustrated in FIG. 9, the granularity of the particles of sugar: glutamine: salt of the object (for example, Western-style rice crackers) by the flavor sensor was 45:1:3, but based on the difference in the sensitivity score between body A (user A) and body B (user B), the granularity is corrected to be coarser and is output to the body B side as 45:3:6.

In this way, modeling of correction or a learner may be constructed by the granularity of particles. For example, in the example of a linear model, corrected output = k * flavor sensor * granularity ratio + b (where granularity ratio = output granularity / flavor sensor granularity) may be used (k and b are coefficients).

### (3.2.2) Taste Transmission Correction by Age Group

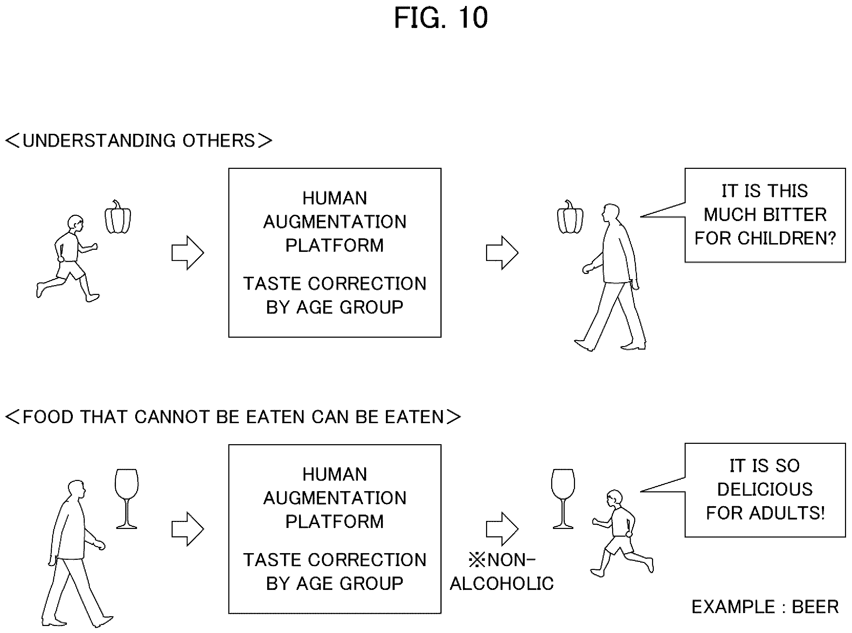

FIG. 10 is an explanatory diagram of correction by age group of the taste augmentation target person (user). The way taste is perceived changes by age group. The human augmentation platform automatically corrects the way taste is perceived by age group.

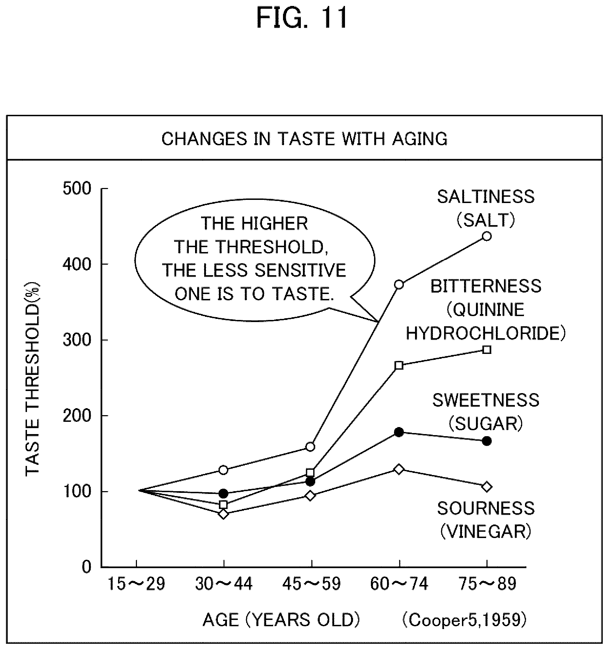

FIG. 11 is a graph illustrating changes in taste associated with aging. As illustrated in FIG. 11, saltiness and bitterness have large differences in the way they are perceived, especially depending on the age. For example, in the case of beer, when transmitting the bitterness perceived by a person in their 30s to a person in their 50s, it is necessary to make the bitterness 1.5 times. Further, in the case of edamame, when transmitting the saltiness perceived by a person in their 50s to a person in their 70s, it is necessary to make the saltiness 2.5 times.

By such correction, as illustrated in FIG. 10, the taste (the way taste is perceived) of others can be shared between generations. For example, it becomes possible for an adult to understand how a child perceives bitterness. Further, it becomes possible for a child to perceive the taste of foods and beverages that children cannot ingest, such as beer.

### (3.2.3) AI Model Construction for Personalized Taste Transmission

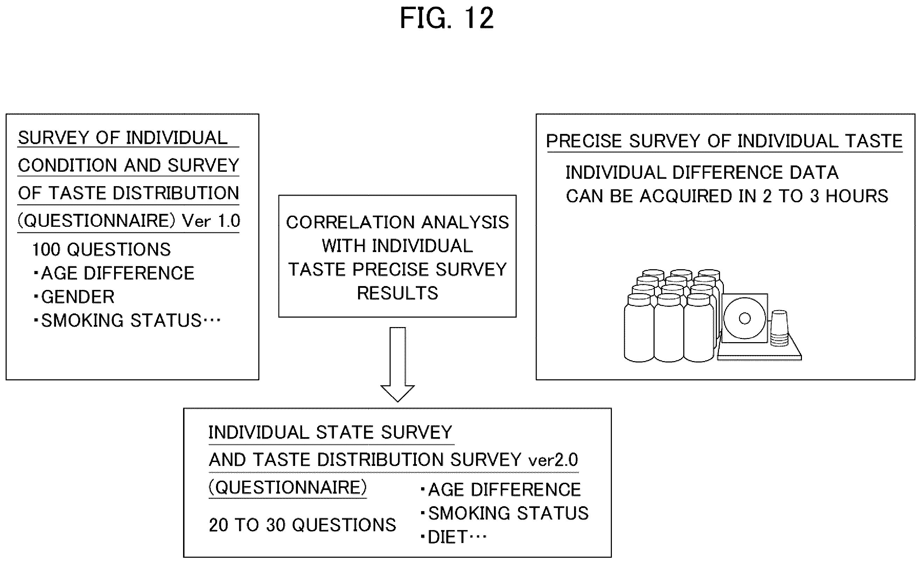

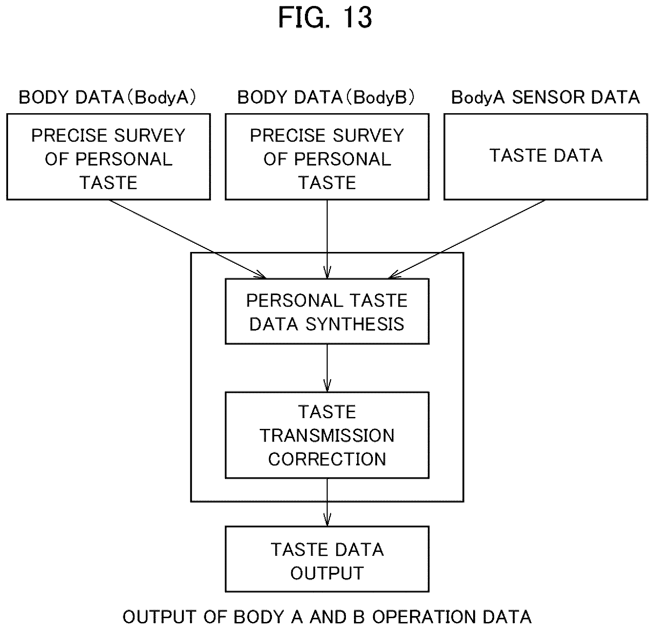

FIGS. 12 and 13 are explanatory diagrams of AI model construction for personalized taste transmission. First, as preparation, the correlation between "personal state survey and taste variance survey (questionnaire)" and "precise survey of personal taste" may be analyzed.

Next, based on the analysis result, "personal state survey and taste variance survey (questionnaire)" is reconstructed by narrowing down to question items with high correlation. The human augmentation platform may make personalized taste transmission correction. As a result, the number of questions constituting the questionnaire can be reduced from about 100 to about 20 to 30.

As illustrated in FIG. 13, the human augmentation platform may synthesize the result of the precise survey of personal taste and the taste data acquired by the sensor as personal taste data. The human augmentation platform may execute the taste transmission correction as described above using such personal taste data of a plurality of individuals and output operation data to the side that augments the taste (body B side).

Although it takes time to individually conduct a precise survey of personal taste, it is possible to easily share taste between different users while saving time by "personal state survey (questionnaire)" that can be conducted in a short time with a reduced number of questions and taste transmission correction. As a result, for example, taste experiences such as "perceiving the taste of others," "experiencing (the same taste as) poisonous mushrooms" and "enjoying the taste of a spicy dish region: Hunan Province" also become easy.

### (3.2.4) AI Model Construction for Conversion from Language to Taste

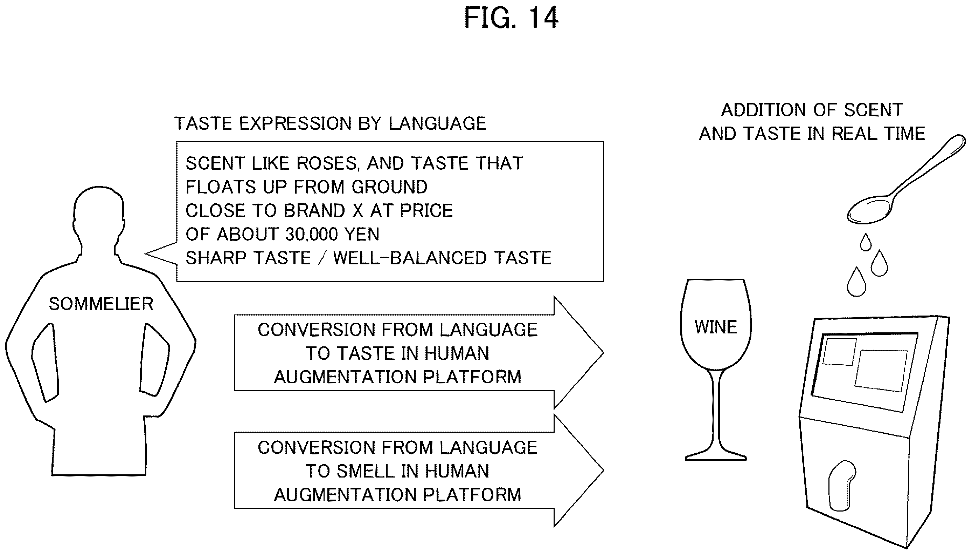

FIG. 14 is an explanatory diagram of AI model construction for conversion from language to taste. As illustrated in FIG. 14, the human augmentation platform may execute processing related to, for example, the expression for wine (food) and taste factor analysis.

For example, based on the fact that a sommelier has expressed the taste of a specific wine in language as illustrated in FIG. 14 as "a scent like roses, and a taste that floats up from the ground. Close to brand X at a price of about 30,000 yen. Sharp taste / well-balanced taste," the human augmentation platform can acquire taste data associated with the language from the AI system and convert the language into taste data. Further, the human augmentation platform may acquire smell data associated with the language from the AI system and convert the language into smell data. As a result, it becomes possible to add scent and taste to the actuator in real time.

### (3.2.5) AI Model Construction for Conversion from Taste to Language

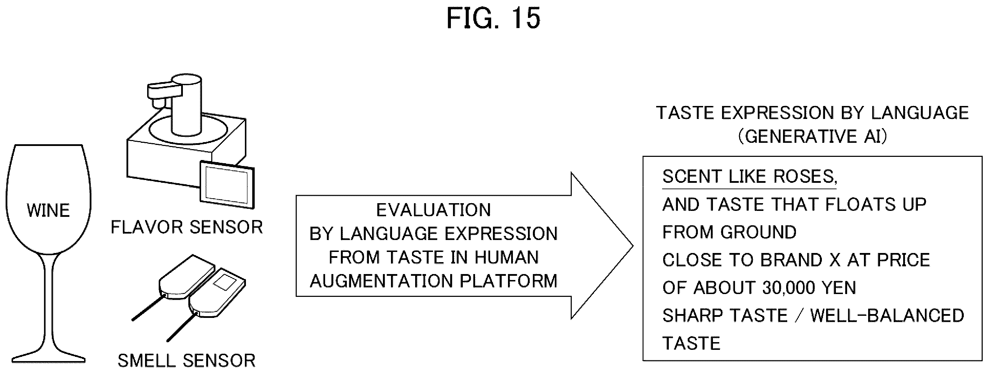

FIG. 15 is an explanatory diagram of AI model construction for conversion from taste to language. As illustrated in FIG. 15, the human augmentation platform may execute processing related to, for example, evaluation by language expression from the taste of wine (food).

As illustrated in FIG. 15, the human augmentation platform can acquire language expression associated with taste or smell data acquired using a flavor sensor or a smell sensor from the AI system, and convert the taste or smell data into language information (for example, "a scent like roses").

The human augmentation platform does not necessarily have to use the AI system. For example, when the smell sensor can classify the scent of roses, the human augmentation platform may directly generate language information without going through the AI system.

### (4) Operation and Effect

According to the embodiments described above, the following effects are obtained. Specifically, the human augmentation platform device 100 compares the sensitivity information of a specific user (first sensitivity information) selected from among the plurality of pieces of acquired sensitivity information with the sensitivity information of another user (second sensitivity information) selected from among the plurality of pieces of sensitivity information. The human augmentation platform device 100 corrects the sensitivity score (first sensitivity score) included in the first sensitivity information based on the comparison result between the first sensitivity information and the second sensitivity information, and converts the difference between the first sensitivity score and the sensitivity score (second sensitivity score) included in the second sensitivity information into control data obtained by multiplying the difference by the basic data of taste such as a dish. The human augmentation platform device 100 can actuate a predetermined device (taste/odor actuator 70) based on the control data.

Therefore, even in the case of taste and smell with large individual differences, it becomes possible to augment perception using the human augmentation platform. That is, the human augmentation platform device 100 can accommodate individual differences in taste and smell.

In the present embodiment, the human augmentation platform device 100 can correct the first sensitivity score to match the second sensitivity score by changing the granularity of the constituent elements included in a taste object. Therefore, even when the sensitivity to taste differs between individuals, the device can be actuated so that the same taste is perceived.

In the present embodiment, the human augmentation platform device 100 can also correct the first sensitivity score according to the age of the user to match the second sensitivity score. Therefore, even when the sensitivity to taste differs depending on the age, the device can be actuated so that the same taste is perceived.

In the present embodiment, the human augmentation platform device 100 can output control data including information in which the sensitivity score is verbalized by inputting the sensitivity information into an artificial intelligence (AI) system (it is also possible to generate taste/smell data from language information as described above). Therefore, mutual conversion between taste/smell data and language information expressing the taste/smell by the data becomes possible. Therefore, verbalization of taste and smell or generation of taste/smell data from language information becomes easy.

In the present embodiment, the human augmentation platform device 100 can apply feedback control (PID control) between the first sensitivity score and the second sensitivity score. Therefore, the accuracy of the control data that matches the second sensitivity score can be improved.

### (5) Other Embodiments

Although the contents of the present proposal have been described above according to the embodiment, the present proposal is not limited to these descriptions, and it is obvious to those skilled in the art that various modifications and improvements are possible.

For example, in the embodiment described above, the human augmentation platform device 100 supports the augmentation of taste and smell, but it is not necessarily necessary to support both taste and smell. The human augmentation platform device 100 may support either taste or smell. Further, in the embodiment described above, the human augmentation platform device 100 realizes conversion between language and taste/smell data using the AI system, but the AI system is not necessarily essential. Further, the type of the AI system is typically a generative AI, but is not particularly limited, and the type of the generative AI is also not particularly limited.

The block diagram (FIG. 2) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

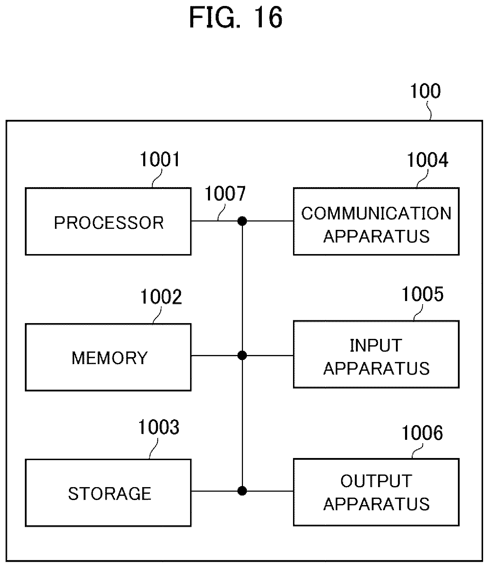

Further, the above-described human augmentation platform device 100 may function as a computer that performs processing of a radio communication method of the present disclosure. FIG.16 is a diagram illustrating an example of a hardware configuration of the human augmentation platform device 100. As illustrated in FIG. 16, the human augmentation platform device 100 may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 2) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

**In** the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

### (Supplementary Notes)

The disclosure described above may be expressed as follows. A first feature is a human augmentation platform device including: an acquisition unit that presents questions regarding perception including at least one of taste or smell to a user and acquires a plurality of pieces of sensitivity information obtained by multiplying a sensitivity score of the perception of the user by basic data of the perception; a comparison unit that compares first sensitivity information selected from among the plurality of pieces of sensitivity information acquired by the acquisition unit with second sensitivity information selected from among the plurality of pieces of sensitivity information acquired by the acquisition unit; a conversion unit that converts a difference between a first sensitivity score included in the first sensitivity information and a second sensitivity score included in the second sensitivity information into control data obtained by multiplying the difference by the basic data; and an actuation unit that actuates a predetermined device based on the control data.

A second feature is that, in the first feature, the conversion unit corrects the first sensitivity score to match the second sensitivity score by changing a granularity of constituent elements included in the taste object.

A third feature is that, in the first or second feature, the conversion unit corrects the first sensitivity score according to an age of the user to match the second sensitivity score.

A fourth feature is that, in any one of the first to third features, the conversion unit acquires language information, in which the sensitivity score is verbalized based on the sensitivity information, by inputting the sensitivity information into an artificial intelligence system, and the actuation unit outputs the control data including the language information.

A fifth feature is that, in any one of the first to fourth features, the conversion unit acquires the sensitivity score quantified based on language information by inputting language information verbalized by the user into an artificial intelligence system, and the actuation unit outputs the control data using the sensitivity score.

A sixth feature is that, in any one of the first to fifth features, the conversion unit applies feedback control between the first sensitivity score and the second sensitivity score.

### REFERENCE SIGNS LIST

10 Human augmentation system
20 Communication network
40 Taste sensor
50 Smell sensor
55 Language input unit
60 Language output unit
70 Taste/odor actuator
100 Human augmentation platform device
110 Sensitivity information acquisition unit
120 Sensor data acquisition unit
125 Language information acquisition unit
130 Body DB
140 Operation DB
150 Comparison processing unit
160 Data conversion unit
170 Actuation unit
1001 Processor
1002 Memory
1003 Storage
1004 Communication device
1005 Input device
1006 Output device
1007 Bus

## Claims

1. A human augmentation platform device comprising:
an acquisition unit that presents questions regarding perception including at least one of taste or smell to a user and acquires a plurality of pieces of sensitivity information obtained by multiplying a sensitivity score of the perception of the user by basic data of the perception;
a comparison unit that compares first sensitivity information selected from among the plurality of pieces of sensitivity information acquired by the acquisition unit with second sensitivity information selected from among the plurality of pieces of sensitivity information acquired by the acquisition unit;
a conversion unit that converts a difference between a first sensitivity score included in the first sensitivity information and a second sensitivity score included in the second sensitivity information into control data obtained by multiplying the difference by the basic data; and
an actuation unit that actuates a predetermined device based on the control data.

2. The human augmentation platform device according to claim 1, wherein the conversion unit corrects the first sensitivity score to match the second sensitivity score by changing a granularity of constituent elements included in a taste object.

3. The human augmentation platform device according to claim 1, wherein the conversion unit corrects the first sensitivity score according to an age of the user to match the second sensitivity score.

4. The human augmentation platform device according to claim 1, wherein the conversion unit acquires language information, in which the sensitivity score is verbalized based on the sensitivity information, by inputting the sensitivity information into an artificial intelligence system, and the actuation unit outputs the control data including the language information.

5. The human augmentation platform device according to claim 1, wherein
the conversion unit acquires the sensitivity score quantified based on language information by inputting language information verbalized by the user into an artificial intelligence system, and
the actuation unit outputs the control data using the sensitivity score.

6. The human augmentation platform device according to claim 1, wherein the conversion unit applies feedback control between the first sensitivity score and the second sensitivity score.

7. A perception augmentation method comprising:
a step of presenting questions regarding perception including at least one of taste or smell to a user and acquiring a plurality of pieces of sensitivity information obtained by multiplying a sensitivity score of the perception of the user by basic data of the perception;
a step of comparing first sensitivity information selected from among the acquired plurality of pieces of sensitivity information with second sensitivity information selected from among the acquired plurality of pieces of sensitivity information;
a step of converting a difference between a first sensitivity score included in the first sensitivity information and a second sensitivity score included in the second sensitivity information into control data obtained by multiplying the difference by the basic data; and
a step of actuating a predetermined device based on the control data.
